(19) **Europäisches Patentamt / European Patent Office / Office européen des brevets**

(11) **EP 3 959 523 B1**

(12) **FASCICULE DE BREVET EUROPEEN**

(45) Date de publication et mention
de la délivrance du brevet:
**26.02.2025 Bulletin 2025/09**

(21) Numéro de dépôt: **19721229.3**

(22) Date de dépôt: **23.04.2019**

(51) Classification Internationale des Brevets (IPC):
**G01P 3/489** *(2006.01)*    **B60T 8/172** *(2006.01)*
**B60W 40/105** *(2012.01)*    **B60W 40/107** *(2012.01)*

(52) Classification Coopérative des Brevets (CPC):
**G01P 3/489; B60T 8/172; B60W 40/105;**
B60T 2250/04

(86) Numéro de dépôt international:
**PCT/EP2019/060287**

(87) Numéro de publication internationale:
**WO 2020/216430 (29.10.2020 Gazette 2020/44)**

(54) **PROCEDE D'ESTIMATION ET ADAPTATION DE LA VITESSE ET DE L'ACCELERATION D'UN VEHICULE**

VERFAHREN ZUR SCHÄTZUNG UND ANPASSUNG DER GESCHWINDIGKEIT UND BESCHLEUNIGUNG EINES FAHRZEUGS

METHOD FOR ESTIMATING AND ADJUSTING THE SPEED AND ACCELERATION OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**02.03.2022 Bulletin 2022/09**

(73) Titulaires:
- **Ampere SAS**
  **92100 Boulogne-Billancourt (FR)**
- **NISSAN MOTOR Co., Ltd.**
  **Yokohama-shi, Kanagawa 221-0023 (JP)**

(72) Inventeurs:
- **DAVINS-VALLDAURA, Joan**
  **78150 LE CHESNAY (FR)**
- **LEMIERE, Paul**
  **61230 GACE (FR)**
- **PITA-GIL, Guillermo**
  **7800 VERSAILLES (FR)**

- **MALLOL, Denis**
  **77160 PROVINS (FR)**
- **DEBORNE, Renaud**
  **78150 LE CHESNAY (FR)**

(74) Mandataire: **Novagraaf Technologies**
**2 rue Sarah Bernhardt**
**CS90017**
**92665 Asnières-sur-Seine Cedex (FR)**

(56) Documents cités:
CN-A- 104 601 072    FR-A1- 2 935 807
US-A1- 2017 219 381

- **WILMAR HERNANDEZ: "Improving the Response of a Wheel Speed Sensor by Using a RLS Lattice Algorithm", SENSORS, vol. 6, no. 2, 1 January 2006 (2006-01-01), pages 64 - 79, XP055543102, DOI: 10.3390/s6020064**

**Description**

**Domaine technique**

L'invention se rapporte au domaine des véhicules automobiles. Elle porte plus particulièrement sur une stratégie d'estimation de la vitesse et de l'accélération associée, allant de hautes vitesses jusqu'aux très faibles vitesses, en s'affranchissant des limites de capteurs actuels.

**État de la technique**

Dans le contexte du développement des lois de commandes, la connaissance d'une vitesse précise et d'une accélération associée sont très importantes. Par exemple, les lois de contrôle utilisées sur les systèmes ADAS (systèmes d'aide à la conduite) et le véhicule autonome ont toujours besoin d'avoir l'information de vitesse et d'accélération.

Sur les véhicules actuels, la vitesse et l'accélération sont déjà calculées de manière précise au-dessus d'un certain seuil. Si la vitesse réelle est inférieure à ce seuil, l'information sur la vitesse et l'accélération ne sont pas disponibles. On désigne communément cette plage de vitesses comme « basse vitesse ».

Le problème principal est que, dû aux limitations de capteurs utilisés, la vitesse ne peut pas être bien estimée en dessous dudit seuil de vitesse.

Par conséquent, les lois de commandes utilisées ne peuvent pas contrôler de manière robuste les différents systèmes à basse vitesses ; comme par exemple :

- Les systèmes de parking (connus en anglais sous HFPB-Hands Free Parking Brake et auto-park)
- Les systèmes ACC (régulateur de distance) pour les situations de « Stop&Start »
- La voiture autonome ou système TJP (pour Traffic Jam Pilot) dans des situations d'embouteillage.

Un deuxième problème est l'utilisation de la valeur de l'accélération provenant de l'accéléromètre. Cette valeur n'est pas très précise (elle a des décalages) à cause de :

- La position de l'accéléromètre après l'installation en usine

- Certaines grandeurs externes comme la pente et le devers de la route

- Le roulis et le tangage de la caisse.

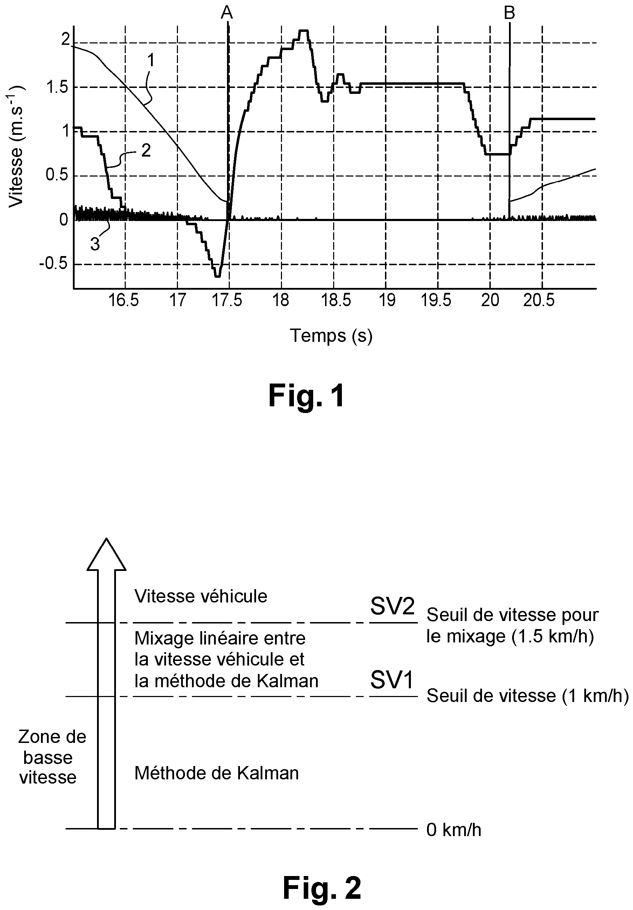

La figure 1 représente un graphique illustrant le problème rencontré. La vitesse actuellement estimée du véhicule est représentée par la courbe 1, la valeur de l'accéléromètre est représentée par la courbe 2, la courbe 3 représente les « pics » des roues codeuses (c'est-à-dire les pics de signaux qu'elles envoient au passage d'une dent, une telle roue étant aussi appelée « roue dentée ») et entre les traits A et B la zone de basse vitesse où l'on roule en dessous d'un seuil de 1 km/h. Les pics indiquent si les roues ont tourné ou non et donnent une image de la vitesse par leur amplitude.

Dans la zone entre les traits A et B, la vitesse est inconnue. On voit par exemple dans la partie droite de la zone à basse vitesse que les roues tournent (présence de pics des roues codeuses) mais on ne détecte aucune vitesse en dessous du seuil de 1km/h.

Enfin, le tracé de l' accéléromètre (courbe 2) montre un décalage dans la zone de basse vitesse (zone sans présence de pics et accéléromètre constant à valeur non nulle).

Ainsi, il devient nécessaire de développer une stratégie d'estimation de la vitesse et de l'accélération dans la zone des basses vitesses (entre A et B), en complément de la valeur de vitesse déjà présente à la voiture. Un exemple d'une telle stratégie est connu du document « Improving the Response of a Wheel Speed Sensor by Using a RLS Lattice Algorithm » de W. Hernandez, publiée dans Sensors de juin 2006, pages 64-79.

Ce document divulgue plus particulièrement l'utilisation d'un filtre adaptatif utilisant l'algorithme des moindres carrés récursifs (en anglais « *RLS* ») pour traiter un signal relatif à la vitesse d'un véhicule. Le principal avantage de ce type de solution logicielle à base de filtrage adaptatif réside dans son faible coût.

Il est également connu de US2017/219381 A1 un ensemble rotor permettant une détection améliorée à basse vitesse, employé par un gyroscope pour le contrôle d'attitude d'engins spatiaux.

Cependant, un problème plus important demeure au-delà de l'estimation de la vitesse, c'est la discontinuité des valeurs de vitesse et accélération estimées lors d'un passage de la plage de vitesses hautes, situées au-dessus du seuil, vers la plage des vitesses basses situées au-dessous du seuil. L'objectif de la présente invention est notamment de résoudre ce problème technique en proposant une méthode permettant d'estimer la vitesse et/ou l'accélération d'un véhicule à basse vitesse tout en étant adaptée à la mesure précise de la vitesse du véhicule à moyenne et haute vitesse, sans présenter de discontinuité de ces valeurs.

Description de l'invention

À cet effet, l'invention a pour objet un procédé d'estimation de la vitesse d'un véhicule automobile dans lequel :

- On définit un premier seuil de vitesse SV1 correspondant à une valeur de vitesse minimale fournie par un capteur de vitesse angulaire de roues du véhicule ;
- On définit un deuxième seuil de vitesse SV2, supérieur à SV1 ;
- On estime des valeurs de basses vitesses lorsque le véhicule roule en dessous de SV1 en utilisant une méthode d'estimation de type filtre adaptatif;
- On mesure des valeurs de hautes vitesse lorsque le véhicule roule au-dessus de SV2 en utilisant des valeurs de la vitesse du véhicule fournies par les capteurs de vitesse angulaire de roues ;
- Dans la zone intermédiaire entre SV1 et SV2, on réalise un mixage de la haute vitesse avec la basse vitesse.

Selon l'invention, on utilise trois plages de vitesses : basse vitesse, haute vitesse et une zone intermédiaire de mixage. Le fait d'utiliser une plage de mixage permet d'éviter des discontinuités sur la vitesse ni l'accélération (indispensable pour garantir la stabilité des lois de commandes).
Avantageusement, le filtre adaptatif est un filtre de Kalman.
Avantageusement, dans la zone intermédiaire entre SV1 et SV2, le mixage est réalisé périodiquement à des instants successifs en utilisant une méthode de mixage linéaire suivant la formule :

$$vitesse = vitesse_{kalman}^{basse} \times \frac{SV2 - vitesse_{t-1}}{SV2 - SV1} + vitesse_{véhicule}^{haute} \times \frac{vitesse_{t-1} - SV1}{SV2 - SV1}$$

Ce mixage linéaire permet de calculer la valeur de la vitesse mixée (*vitesse*) en utilisant les valeurs de vitesse de la méthode Kalman ( $vitesse_{kalman}^{basse}$ ) et de la vitesse véhicule ( $vitesse_{véhicule}^{haute}$ ) La vitesse de véhicule ( $vitesse_{véhicule}^{haute}$ ) est la vitesse mesurée en utilisant la vitesse angulaire des roues.
La *vitesse* est la vitesse mixée à l'instant t courant, **vitesse_{t-1}** est la vitesse mixée à l'instant t-1 de mixage précédent, ( $vitesse_{kalman}^{basse}$ ) est la valeur de vitesse calculée par la méthode de Kalman à l'instant t courant et ( $vitesse_{véhicule}^{haute}$ ) est la valeur de vitesse mesurée par le capteur angulaire à l'instant t courant.
Selon une caractéristique de l'invention, le premier seuil SV1 peut être de 1km/h.
Selon une autre caractéristique de l'invention, le deuxième seuil de vitesse SV2 peut être de 1,5km/h.
Avantageusement, à l'étape C) on estime également la valeur de l'accélération grâce au filtre de Kalman et à l'étape E) on réalise également un mixage des valeurs de l'accélération entre SV1 et SV2.
Un avantage de l'invention est que la vitesse est estimée sans discontinuité et que la valeur de l'accélération associée peut aussi être prise en compte.

**Brève description des figures**

L'invention sera mieux comprise à la lecture de la description qui va suivre, d'un exemple de réalisation donné à titre illustratif, la description faisant référence aux dessins annexés parmi lesquels :

- la figure 1 représente un graphique illustrant les problèmes rencontrées aux faibles vitesses ;
- la figure 2 illustre schématiquement le principe de l'invention ;
- les figure 3 et 4 représentent des exemples de résultats de l'utilisation du procédé de l'invention en phase de décollage et d'arrête d'un véhicule.

**Description détaillée**

La figure 2 représente schématiquement le principe général de l'invention dans lequel on définit 3 zones de vitesse :

- une zone de faibles vitesses, au-dessous d'un premier seuil SV1 au-dessous duquel les valeurs de la vitesse et de l'accélération ne sont pas disponibles. Typiquement de 1km/h.

Dans cette zone, la vitesse est mesurée suivant la méthode de Kalman. Cette méthode est connue en soi de l'homme du métier, mais elle est rappelée ci-dessous pour plus de clarté de l'exposé de l'invention.

- Une zone de vitesses hautes au-dessus d'un deuxième seuil SV2 supérieur au premier seuil SV1, par exemple de 1,5km/h. Dans cette zone les valeurs de la vitesse et de l'accélération sont fournis par les capteurs du véhicule ; et
- Une zone de mixage situé entre les deux seuils SV1 et SV2.

## I. Estimation de la vitesse avec la méthode Kalman

### I. 1 Filtre de Kalman classique.

Un filtre Kalman prend en compte trois variables d'état [x] :

- x(1) distance parcourue depuis le dernier instant t ;
- x(2) une information de vitesse ;
- x(3) une dernière d'accélération.

Les deux mesures de capteur [z] utilisées pour l'estimation de la variable d'état sont :

- z(1) la moyenne des pics des roues codeuses (WT). Les signaux des pics des 4 roues sont déjà présents dans la messagerie (CAN) du véhicule. Cette information permet d'avoir une idée du déplacement de chaque roue en comptant à chaque pas d'échantillonnage combien de dents du codeur sont passés (typiquement 48 dents)
- z(2) les vitesses angulaires de roues (WS). Les signaux des vitesses angulaires des 4 roues sont déjà présents dans la messagerie (CAN) du véhicule. La moyenne des roues arrière sera utilisée dans le Kalman (axe de roues non-motrices, c'est-à-dire, moins de glissement aux phases de décollage)

Le système d'équations du filtre de Kalman est :

1) Prédiction

$$\hat{x}_{k|k-1} = F_k \hat{x}_{k-1|k-1} + B_k u_{k-1}$$

$$P_{k|k-1} = F_k P_{k-1|k-1} F_k^T + Q_k$$

2) Correction

$$\tilde{y}_k = z_k - H_k \hat{x}_{k|k-1}$$

$$S_k = H_k P_{k|k-1} H_k^T + R_k$$

$$K_k = P_{k|k-1} H_k^T S_k^{-1}$$

$$\hat{x}_{k|k} = \hat{x}_{k|k-1} + K_k \tilde{y}_k$$

$$P_{k|k} = (I - K_k H_k) P_{k|k-1}$$

La notation utilisée est la suivante :

- $x$ : état du système (vecteur)
- $z$ : mesures capteur (vecteur)
- $P$ : matrice de covariance de l'estimée
- $F_k$ : matrice de transition de l'état
- $u_k$ : entrée de commande

- $B_k$ : matrice de transition de la commande
- $H$ : matrice de transition de la mesure
- $Q$ : matrice de covariance du bruit de modèle (précision)
- $R$ : matrice de covariance du bruit de de mesure (précision)
- $I$ : matrice identité
- $\hat{x}$ : valeur estimée de la variable x
- $\tilde{x}$ : valeur mesurée de la variable x

Remarque : *Dans le filtre de Kalman mis en place le vecteur u est nul, ce qui simplifie la première équation.*

### I.2 Estimation de la vitesse

En entrée du système il y a les deux données capteur qui correspondent aux vitesses de roue (WS) et les pics des roues codeuses (WT). Ces données sont traitées (bloc DP : « Data processing ») puis passent dans le filtre de Kalman (bloc « Estimation ») qui lui en ressort une vitesse et une accélération.

### Première étape - « Traitement des données » :

- Top des roues: Le codeur envoie la position de la dernière dent vue. Nous utiliserons cet incrément du nombre de dents [*WT*] pendant un pas d'échantillonnage du système [*Te*] (pas forcement à la même cadence que l'enregistrement du capteur). Ensuite la valeur moyenne entre les 4 roues sera utilisée comme mesure du [*WT*]. La valeur équivalente à une vitesse linéaire et utilisant les pics des roues est

$$\frac{2\pi R}{nb\_pic} * WT$$

avec [*R*] le rayon des roues supposé constant et connu (paramètre de réglage) et [*nb_pic*] le nombre de dents du codeur.

- WS : La moyenne des vitesses angulaires des roues arrière (axe de roues non-motrices, c'est-à-dire, moins de glissement aux phases de décollage) sera utilisée dans le filtre Kalman. Cette vitesse angulaire [*WS*] sera convertie en vitesse linéaire à partir de :

$$\frac{2\pi R}{60} * WS$$

### Deuxième étape : « Estimation » :

Le modèle de Kalman utilisé est le suivant :

### *Equation d'état :*

$$x_k = \begin{pmatrix} \boldsymbol{d}_k \\ \boldsymbol{v}_k \\ \boldsymbol{a}_k \end{pmatrix} = \begin{pmatrix} \boldsymbol{d}_{k-1} + Te * \boldsymbol{v}_{k-1} + \dfrac{Te^2}{2} * \boldsymbol{a}_{k-1} \\ \boldsymbol{v}_{k-1} + Te * \boldsymbol{a}_{k-1} \\ \boldsymbol{a}_{k-1} \end{pmatrix}$$

$d_k$, $v_k$ et $a_k$ sont respectivement la distance parcourue, la vitesse et l'accélération à l'itération k du filtre

### Vecteur d'entrée des données (« Input data vector » en anglais):

$$z_k = \begin{pmatrix} \dfrac{2\pi R}{nb\_pic} * WT \\ \dfrac{2\pi R}{nb\_pic} * Wheel\_Top + \dfrac{2\pi R}{60} * WS \\ \dfrac{1}{Te} * \dfrac{2\pi R}{60} * WS \end{pmatrix}$$

**nb_pic = 96,** le nombre d'incrément du codeur.
**Te = 0.01 s,** la période d'échantillonnage.

L'équation d'état représente la première ligne de l'étape de prédiction montrée précédemment. L'hypothèse faite ici est une évolution constante de l'accélération.

Le vecteur d'entrée [z] correspond à l'insertion des données capteur dans le filtre de Kalman. La donnée [*WT*] correspond à la somme des pics des roues codeuses divisé par quatre (le nombre de roues). La variable [*WS*] elle est égale à la somme de la vitesse des roues arrières du véhicule divisé par 2.

Cette dernière donnée n'étant pas toujours disponible (tombe à 0 en dessous de SV1), une adaptation de la matrice H (voir le système d'équations de Kalman, phase correction) dans le filtre de Kalman a été réalisée.

## II. Mixage de vitesses

Dans la zones des vitesses située entre le premier seuil SV1 et le deuxième seuil SV2, entre 1km/h et 1,5km/h dans l'exemple représentés figure 2, un mixage de la haute vitesse avec la basse vitesse est réalisé.

Plus particulièrement, le mixage eut être réalisé en utilisation une méthode de mixage linéaire suivant la formule :

$$vitesse = vitesse_{kalman}^{basse} \times \frac{SV2 - vitesse_{t-1}}{SV2 - SV1} + vitesse_{véhicule}^{haute} \times \frac{vitesse_{t-1} - SV1}{SV2 - SV1}$$

Ce mixage linéaire permet de calculer la valeur de la vitesse mixée (*vitesse*) en utilisant les valeurs de vitesse de la méthode Kalman ( $vitesse_{kalman}^{basse}$ ) et de la vitesse véhicule ( ($vitesse_{véhicule}^{haute}$ )

La vitesse de véhicule ( $vitesse_{véhicule}^{haute}$ ) est la vitesse calculée en utilisant la vitesse angulaire des roues. A basse vitesse la valeur de la vitesse haute du véhicule n'est pas disponible.

Afin de garantir un mixage correct, la valeur de la vitesse de référence utilisée est la dernière valeur de la vitesse. Cette valeur est utilisée pour définir le poids de chaque vitesse (poids défini entre la distance relative par rapport aux seuils) . Par exemple, le poids de la vitesse de la méthode de Kalman est défini comme ( $\frac{SV2 - vitesse_{t-1}}{SV2 - SV1}$ ).

| | t-1 (dernière valeur) | t=0 (valeur actuelle) |
|---|---|---|
| Vitesse mixée | $vitesse_{t-1}$ | $vitesse$ |
| Vitesse estimée (avec la méthode de Kalman) | Non utilisée | $vitesse_{kalman}^{basse}$ |
| Vitesse véhicule (en utilisant les vitesses angulaires) | Non utilisée | $vitesse_{véhicule}^{haute}$ |

Le choix de la vitesse de référence permet de garantir une continuité pendant le mixage.

L'utilisation de la vitesse estimée avec la méthode de Kalman n'est pas possible car la valeur initiale peut-être supérieure à *SV2* (à cause du retard du filtre). L'utilisation de la vitesse du véhicule n'est également pas possible car elle présente une discontinuité aux basses vitesses où la vitesse angulaire n'est plus disponible.

### III. Exemples de Résultats obtenus

### III.1 - Phase de décollage

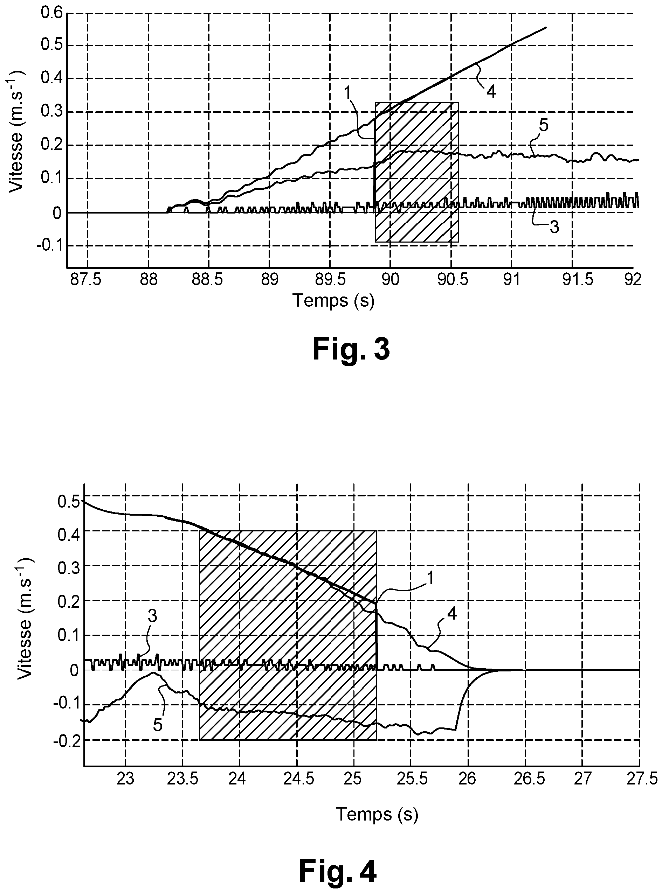

La figure 3 représente des résultats obtenus en phase de décollage du véhicule. La courbe en vert correspond à la vitesse du système actuel, la courbe 3 montre les WT, les courbes 4 et 5 montrent respectivement la vitesse et l'accélération calculées selon la méthode de l'invention.

Concernant la vitesse, on voit que le filtre de Kalman propose une vitesse 4 croissante qui rejoint la vitesse du véhicule 1 utilisée actuellement. La vitesse 4 calculée par la méthode de l'invention décolle au niveau du premier pic de roue détecté, c'est-à-dire, premier pic de la courbe 3.

Concernant l'accélération 5, on peut faire le même constat. La nouvelle estimation démarre au premier pic détecté et converge assez bien vers une valeur qui correspond à celle attendue pour la vitesse 4.

La région grise correspond à la région de transition entre la basse et haute vitesse. On peut constater qu'il n'y a pas de discontinuité et que la valeur de vitesse estimée présente une transition cohérente par rapport à la dynamique de la vitesse réelle du véhicule.

### III. 2 En Phase de freinage jusqu'à l'arrêt

La Figure 4 représente des résultats obtenus en phase d'arrêt.

En regardant la vitesse, on voit que la courbe 4 suit un profil de vitesse plus juste en accord avec les pics de roues codeuses que la courbe 1. On détecte aussi l'arrêt du véhicule plus proprement avec la méthode de l'invention.

L'accélération 5 semble correspondre à la vitesse 4 proposée et s'arrête en même temps que la vitesse 4.

La région grise correspond à la région de transition entre la haute et la basse vitesse. On peut constater qu'il n'y a pas de discontinuité et que la valeur de vitesse 4 estimée par mixage présente une transition cohérente par rapport à la dynamique de la vitesse de Kalman.

### Revendications

1. Procédé d'estimation de la vitesse d'un véhicule automobile dans lequel :

   A. On définit un premier seuil de vitesse SV1 correspondant à une valeur de vitesse minimale fournie par un capteur de vitesse angulaire de roues du véhicule ;
   B. On définit un deuxième seuil de vitesse SV2, supérieur à SV1 ;
   C. On estime des valeurs de basses vitesses lorsque le véhicule roule en dessous de SV1 en utilisant une méthode d'estimation de type filtre adaptatif ;
   D. On mesure des valeurs de hautes vitesses lorsque le véhicule roule au-dessus de SV2 en utilisant des valeurs de la vitesse du véhicule fournies par le capteur de vitesse angulaire de roues ;
   E. Dans la zone intermédiaire entre SV1 et SV2, on réalise un mixage de la haute vitesse avec la basse vitesse.

2. Procédé selon la revendication 1 dans lequel le filtre adaptatif est un filtre de Kalman.

3. Procédé selon la revendication 2 dans lequel, dans la zone intermédiaire entre SV1 et SV2, le mixage est réalisé périodiquement à des instants successifs en utilisant une méthode de mixage linéaire suivant la formule :

$$vitesse = vitesse_{kalman}^{basse} \times \frac{SV2 - vitesse_{t-1}}{SV2 - SV1} + vitesse_{véhicule}^{haute} \times \frac{vitesse_{t-1} - SV1}{SV2 - SV1}$$

où *vitesse* est la vitesse mixée à l'instant t courant, *vitesse$_{t-1}$* est la vitesse mixée à l'instant t-1 de mixage précédent, ( $vitesse_{kalman}^{basse}$ ) est la valeur de vitesse calculée par la méthode de Kalman à l'instant t courant et ( $vitesse_{véhicule}^{haute}$ ) est la valeur de vitesse mesurée par le capteur angulaire à l'instant t courant.

4. Procédé selon l'une des revendications 1 à 3, dans lequel le premier seuil SV1 est de 1km/h.

5. Procédé selon l'une des revendications 1 à 4, dans lequel le deuxième seuil de vitesse SV2 est de 1,5km/h.

**6.** Procédé selon l'une des revendications 2 à 5 dans lequel à l'étape C) on estime également la valeur de l'accélération grâce au filtre de Kalman et à l'étape E) on réalise également un mixage des valeurs de l'accélération entre SV1 et SV2.

## Patentansprüche

**1.** Verfahren zum Schätzen der Geschwindigkeit eines Kraftfahrzeugs, wobei:

A. ein erster Geschwindigkeitsschwellenwert SV1 definiert wird, der einem minimalen Geschwindigkeitswert entspricht, der durch einen Winkelgeschwindigkeitssensor von Rädern des Fahrzeugs bereitgestellt wird;
B. ein zweiter Geschwindigkeitsschwellenwert SV2 definiert wird, der größer als SV1 ist;
C. Werte von niedrigen Geschwindigkeiten geschätzt werden, wenn das Fahrzeug unter SV1 fährt, unter Verwendung einer Schätzmethode des Typs adaptiver Filter;
D. Werte von hohen Geschwindigkeiten gemessen werden, wenn das Fahrzeug über SV2 fährt, unter Verwendung der Werte der Geschwindigkeit des Fahrzeugs, die durch den Winkelgeschwindigkeitssensor der Räder bereitgestellt werden;
E. in der Zwischenzone zwischen SV1 und SV2 eine Mischung der hohen Geschwindigkeit mit der niedrigen Geschwindigkeit durchgeführt wird.

**2.** Verfahren nach Anspruch 1, wobei der adaptive Filter ein Kalman-Filter ist.

**3.** Verfahren nach Anspruch 2, wobei in der Zwischenzone zwischen SV1 und SV2 die Mischung periodisch zu aufeinanderfolgenden Zeitpunkten unter Verwendung eines linearen Mischverfahrens gemäß der Formel durchgeführt wird:

$$Geschwindigkeit = Geschwindigkeit_{Kalman}^{niedrig} \times \frac{SV2 - Geschwindigkeit_{t-1}}{SV2 - SV1}$$
$$+ Geschwindigkeit_{Fahrzeug}^{hoch} \times \frac{Geschwindigkeit_{t-1} - SV1}{SV2 - SV1}$$

wobei Geschwindigkeit die gemischte Geschwindigkeit zu dem aktuellen Zeitpunkt t ist, Geschwindigkeit$_{t-1}$ die gemischte Geschwindigkeit zu dem vorherigen Mischzeitpunkt t-1 ist, ( $Geschwindigkeit_{Kalman}^{niedrig}$ ) der Geschwindigkeitswert, der nach der Kalman-Methode berechnet wird, zu dem aktuellen Zeitpunkt t ist und ( $Geschwindigkeit_{Fahrzeug}^{hoch}$ ) der Geschwindigkeitswert ist, der durch den Winkelsensor zu dem aktuellen Zeitpunkt t gemessen wird.

**4.** Verfahren nach einem der Ansprüche 1 bis 3, wobei der erste Schwellenwert SV1 1 km/h beträgt.

**5.** Verfahren nach einem der Ansprüche 1 bis 4, wobei der zweite Geschwindigkeitsschwellenwert SV2 1,5 km/h beträgt.

**6.** Verfahren nach einem der Ansprüche 2 bis 5, wobei in dem Schritt C) auch der Wert der Beschleunigung mithilfe des Kalman-Filters geschätzt wird und in dem Schritt E) auch eine Mischung der Beschleunigungswerte zwischen SV1 und SV2 durchgeführt wird.

## Claims

**1.** Method for estimating the speed of a motor vehicle, wherein:

A. A first speed threshold SV1 is defined, corresponding to a minimum speed value provided by a vehicle angular wheel speed sensor;
B. A second speed threshold SV2 is defined, which is greater than SV1;
C. Low speed values are estimated when the vehicle is traveling below SV1 using an adaptive filter estimation method;
D. High speed values are measured when the vehicle is traveling above SV2 using vehicle speed values provided by the angular wheel speed sensor;
E. In the intermediate zone between SV1 and SV2, high speed is mixed with low speed.

**2.** Method according to claim 1, wherein the adaptive filter is a Kalman filter.

**3.** Method according to claim 2, wherein, in the intermediate zone between SV1 and SV2, the mixing is carried out periodically at successive times using a linear mixing method according to the formula:

$$speed = speed_{kalman}^{low} \times \frac{SV2 - speed_{t-1}}{SV2 - SV1} + speed_{vehicle}^{high} \times \frac{speed_{t-1} - SV1}{SV2 - SV1}$$

where speed is the mixed speed at the current time t, $speed_{t-1}$ is the mixed speed at the previous mixing time t-1, ($speed_{kalman}^{low}$) is the speed value calculated by the Kalman method at the current time t and ($speed_{vehicle}^{high}$) is the speed value measured by the angular sensor at the current time t.

**4.** Method according to one of claims 1 to 3, wherein the first threshold SV1 is 1km/h.

**5.** Method according to one of claims 1 to 4, wherein the second speed threshold SV2 is 1.5km/h.

**6.** Method according to one of claims 2 to 5, wherein, in step C), the value of the acceleration is also estimated by means of the Kalman filter and, in step E), the values of the acceleration between SV1 and SV2 are also mixed.

**Fig. 1**

**Fig. 2**

Fig. 3

Fig. 4

## RÉFÉRENCES CITÉES DANS LA DESCRIPTION

**Documents brevets cités dans la description**

- US 2017219381 A1

**Littérature non-brevet citée dans la description**

- **W. HERNANDEZ**. Improving the Response of a Wheel Speed Sensor by Using a RLS Lattice Algorithm. *Sensors*, June 2006, 64-79